# EUROPEAN PATENT APPLICATION

(11) **EP 4 717 958 A1**
(43) Date of publication of application: **01.04.2026**
(21) Application number: 24810376.4
(22) Date of filing: 21.05.2024
(51) Int. Cl.: F16K 31/06

(54) **VALVE DEVICE**

(30) Priority: 22.05.2023 CN 202310581544
(71) Applicant: Zhejiang Sanhua Intelligent Controls Co.,Ltd, Shaoxing, Zhejiang 312530 (CN)
(72) Inventor: FAN, Haoli, Shaoxing, Zhejiang 312500 (CN)
(74) Representative: Maikowski & Ninnemann Patentanwälte Partnerschaft mbB
(86) International application number: PCT/CN2024/094361
(87) International publication number: WO 2024/240134

(57) **Abstract**

Disclosed is a valve device. The valve device comprises: a static iron core component (7), which is provided with a first hole channel portion (73) and a first positioning portion, the first positioning portion being located at the bottom wall of the first hole channel portion (73), and the first hole channel portion (73) comprising a first hole channel wall; a movable iron core component (5), which is provided with a second hole channel portion (518) and a second positioning portion, the second positioning portion being located at the bottom wall of the second hole channel portion (518), and the second hole channel portion (518) comprising a second hole channel wall; and an elastic member, which is positioned between the static iron core component (7) and the movable iron core component (5), and comprises a first end portion and a second end portion, the first end portion being limited to the first positioning portion, the second end portion being limited to the second positioning portion, and a wire diameter of the elastic member being defined as M. A preset interval is provided between the elastic member and the first hole channel wall and between the elastic member and the second hole channel wall in a radial direction, and the interval is greater than or equal to 0.5M. By means of the valve device, the situation of a spring being deflected in an action process can be relatively improved, and the situation of the contact wear between the elastic member and parts can also be relatively reduced.

## Description

The present application claims the priority to Chinese Patent Application No. 202310581544.0, titled "VALVE DEVICE", filed on May 22, 2023 with the China National Intellectual Property Administration, which is incorporated herein by reference in its entirety.

### FIELD

The present application relates to the technical field of electromagnetic control, and in particular to a valve device.

### BACKGROUND

As a typical valve device, a solenoid valve includes a movable core assembly, a static core component, and an elastic member. The movable core assembly includes a movable core component and a piston connected to it. The elastic member is disposed between the movable core component and the static core component. One side portion of the elastic member abuts against the movable core component, and the other side portion of the elastic member abuts against the static core component. When a coil component is energized, the movable core component is attracted to the static core component, causing the piston to move away from a valve port, thereby opening the valve port. When the coil component is de-energized, the movable core component moves away from the static core component, and the piston closes the valve port under a restoring force of the elastic member.

During an axial reciprocating motion of the movable core component, the elastic member is repeatedly compressed and restored. It may sometimes bend and deform, and is prone to skewing during operation. This can lead to contact and wear between the elastic member and other components.

### SUMMARY

An object of the present application is to provide a valve device, which can mitigate skewing of a spring during its operation and reduce contact and wear between an elastic member and other components.

A valve device provided according to the present application includes a static core component, a movable core component, and an elastic member disposed between the static core component and the movable core component. The elastic member includes a first end portion and a second end portion. A wire diameter of the elastic member is defined as M.

The static core component is provided with a first hole portion and a first positioning portion. The first hole portion is recessed inward from an end face of the static core component, and the first positioning portion is recessed or protrudes from a bottom wall of the first hole portion. A diameter of the first hole portion is greater than that of the first positioning portion. The first hole portion includes a first hole wall. The first end portion is located at and confined by the first positioning portion. There is a predetermined radial spacing L1 between the elastic member and the first hole wall, where L1 ≥ 0.5M.

And/or, the movable core component is provided with a second hole portion and a second positioning portion. The second hole portion is recessed inward from an end face of the movable core component, and the second positioning portion is recessed or protrudes from a bottom wall of the second hole portion. A diameter of the second hole portion is greater than that of the second positioning portion. The second hole portion includes a second hole wall. The second end portion is located at and confined by the second positioning portion. There is a predetermined radial spacing L2 between the elastic member and the second hole wall, where L2 ≥ 0.5M.

In the valve device provided according to an embodiment of the present application, the static core component is provided with the first positioning portion, and the first end portion of the elastic member is located at and confined by the first positioning portion. And/or, the movable core component is provided with the second positioning portion, and the second end portion of the elastic member is located at and confined by the second positioning portion. There is a predetermined radial spacing L1 between the elastic member and the first hole wall, where L1 ≥ 0.5M, and/or there is a predetermined radial spacing L2 between the elastic member and the second hole wall, where L2 ≥ 0.5M. This arrangement reduces the likelihood of frictional contact between the elastic member and the movable core component and/or the static core component while ensuring the positioning of the two end portions of the elastic member.

### BRIEF DESCRIPTION OF THE DRAWINGS

FIG. 1 is a schematic structural view of a solenoid valve according to a first embodiment of the present application;
FIG. 2 is an enlarged view of part A in FIG. 1;
FIG. 3 is a schematic view of a sleeve in FIG. 1;
FIG. 4 is a schematic view of a static core component in FIG. 1;
FIG. 5 is a schematic view of a movable core component in FIG. 1;
FIG. 6 is a schematic view of a movable core main body of the movable core component in FIG. 5;
FIG. 7 is a schematic view of a sealing block of the movable core component in FIG. 5;
FIG. 8 is a schematic view of a guide ring of the movable core component in FIG. 5;
FIG. 9 is a schematic view of a movable core main body of a movable core component of a solenoid valve according to a second embodiment of the present application; and
FIG. 10 is a schematic view of a static core component of the solenoid valve according to the second embodiment of the present application.

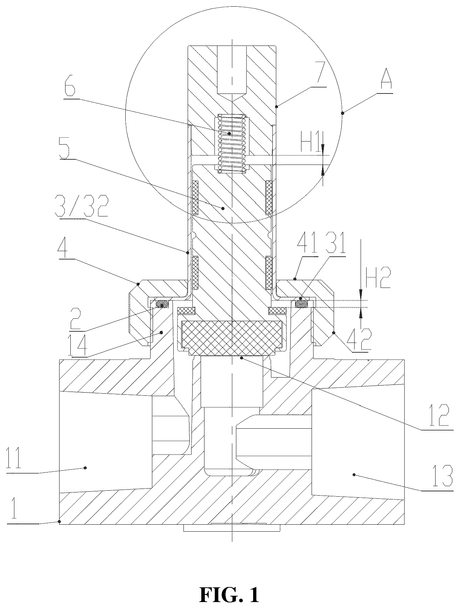

Reference numerals in FIGS. 1 to 10 are as follows:

| | | | |
|---|---|---|---|
| 1. | valve seat; | 11. | inlet; |
| 13. | outlet; | 12. | valve port; |
| 2. | sealing ring; | 3. | sleeve; |
| 31. | first annular portion; | 31a. | upper surface; |
| 31b. | lower surface; | 32. | sleeve main body; |
| 33. | upper end face; | 4. | connecting nut; |
| 41. | second annular portion; | 42. | cylindrical portion; |
| 5. | movable core component; | 51. | movable core main body; |
| 511. | bottom wall; | 512. | annular groove; |
| 513. | second annular step; | 514. | bottom wall; |
| 515. | cylindrical portion; | 516. | limiting portion; |
| 517. | second positioning groove; | 517'. | second positioning boss; |
| 518. | second hole portion; | 519. | bottom wall; |
| 52. | guide ring; | 521. | gap; |
| 53. | washer; | 531. | upper end face; |
| 54. | sealing block; | 541. | lower end face; |
| 542. | upper end face; | 543. | third annular step; |
| 544. | outer circumference; | 6. | spring; |
| 7. | static core component; | 71. | insertion segment; |
| 72. | first annular step; | 73. | first hole portion; |
| 74. | bottom wall; | 75. | first positioning groove; |
| 75'. | first positioning boss; | 76. | bottom wall. |

### DETAILED DESCRIPTION OF THE EMBODIMENTS

In order to provide those skilled in the art with a better understanding of the technical solutions of the present application, the present application is described in further detail below in conjunction with the drawings and specific embodiments.

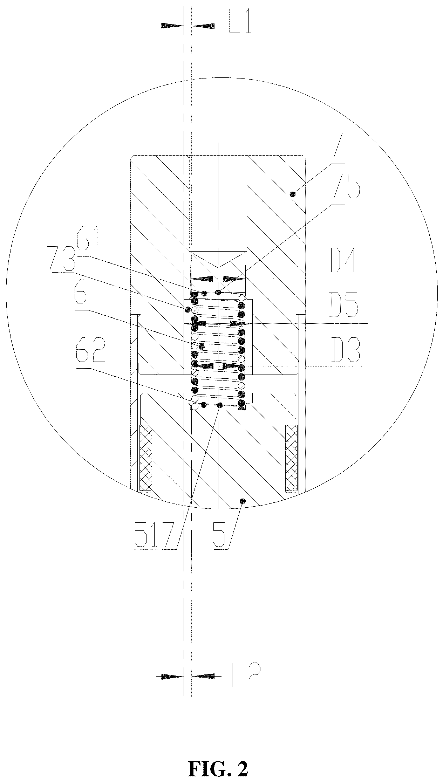

Referring to FIGS. 1 and 2, FIG. 1 is a schematic structural view of a solenoid valve according to a first embodiment of the present application, and FIG. 2 is an enlarged view of part A in FIG. 1.

A valve device is provided according to this embodiment. The valve device may specifically be a solenoid valve. The solenoid valve is taken as an example for the following description. The solenoid valve includes a movable core component 5 and a static core component 7 distributed along an axial direction of the solenoid valve. The solenoid valve further includes a valve seat 1, which is provided with a valve port 12. In FIG. 1, the solenoid valve is in a closed state, where the movable core component 5 presses against the valve port 12 of the solenoid valve to block the valve port 12. From the perspective shown in FIG. 1, when the solenoid valve is energized, an attractive force is generated between the static core component 7 and the movable core component 5, causing the movable core component 5 to move upward along the axial direction of the solenoid valve, so that the movable core component 5 departs from the valve port 12, thereby opening the valve port 12.

In this embodiment, an elastic member is disposed between the movable core component 5 and the static core component 7. The elastic member includes a first end portion and a second end portion. A wire diameter of the elastic member is defined as M. In this embodiment, the elastic member is specifically a spring 6. The wire diameter of the spring 6 is used to characterize a size of a spring body itself. For example, if the spring 6 is made of a steel wire, the wire diameter of the spring 6 refers to the diameter of the steel wire, and a diameter of the spring 6 refers to a diameter of the formed helix. It should be noted that the elastic member may alternatively adopt other elastic structures. Additionally, the spring 6 in this embodiment may be pre-compressed, that is, the spring 6 is always in a compressed state. When the valve is in the closed state, the spring 6 has a certain amount of compression to provide a spring force to press the movable core component 5 against the valve port 12. When the valve is opened, the movable core component 5 moves upward, further compressing the spring 6 and increasing the compression amount. When the solenoid valve is de-energized, the spring 6 provides sufficient restoring force to drive the movable core component 5 to move downward as quickly as possible to block the valve port 12.

As shown in FIG. 2, the static core component 7 has a first end face facing the movable core component 5, and the movable core component 5 has a second end face facing the static core component 7. The first end face is provided with a first hole portion 73, which is recessed inward from the first end face. The second end face is provided with a second hole portion 518, which is recessed inward from the second end face. A part of the spring 6 is located in the first hole portion 73, and another part of the spring 6 is located in the second hole portion 518. Moreover, the static core component 7 is provided with a first positioning portion. The movable core component 5 is provided with a second positioning portion. The first positioning portion is located on a bottom wall 76 of the first hole portion 73. The second positioning portion is located on a bottom wall 519 of the second hole portion 518. An inner diameter of the first hole portion 73 is greater than a diameter of the first positioning portion. An inner diameter of the second hole portion 518 is greater than a diameter of the second positioning portion.

Specifically, an opening of the first hole portion 73 faces the movable core component 5, i.e., faces downward. An opening of the second hole portion 518 faces the static core component 7, i.e., faces upward. In this embodiment, the positioning portions are specifically grooves. The grooves provided on the bottom wall 76 of the first hole portion 73 and the bottom wall 519 of the second hole portion 518 are respectively defined as a first positioning groove 75 and a second positioning groove 517. The first positioning groove 75 is provided on the bottom wall 76 of the first hole portion 73, and the second positioning groove 517 is provided on the bottom wall 519 of the second hole portion 518. The bottom wall 76 of the first hole portion 73 and the bottom wall 519 of the second hole portion 518 are opposite to their respective openings. In FIG. 2, the bottom wall 76 of the first hole portion 73 is an upper wall of the first hole portion 73, and the bottom wall 519 of the second hole portion 518 is a lower wall of the second hole portion 518.

In this embodiment, the first hole portion 73 includes a first hole wall, which is specifically an inner circumference of the first hole portion 73. The first end portion of the elastic member is located at and confined by the first positioning portion. A predetermined radial spacing L1 is defined between the elastic member and the first hole wall, which satisfies L1 ≥ 0.5M. The second hole portion 518 includes a second hole wall, which is specifically an inner circumference of the second hole portion 518. The second end portion of the elastic member is located at and confined by the second positioning portion. A predetermined radial spacing L2 is defined between the elastic member and the second hole wall, which satisfies L2 ≥ 0.5M.

It should be noted that during the compression or release process of the elastic member, its end portion will be radially displaced along the bottom wall of the static core component 7, and the elastic member may easily bend and deform, deviating from a center position of the elastic member. Therefore, by setting L1 ≥ 0.5M and/or L2 ≥ 0.5M, the occurrence of wear between the elastic member and the static core component 7, and/or between the elastic member and the movable core component 5, can be significantly reduced.

As can be seen in this embodiment, a predetermined radial spacing L1 is present between the elastic member and the first hole wall, where L1 ≥ 0.5M, and/or a predetermined radial spacing L2 is present between the elastic member and the second hole wall, where L2 ≥ 0.5M. Thus, there is a predetermined spacing of at least 0.5M between the elastic member and the static core component 7, and/or between the elastic member and the movable core component 5. This reduces frictional contact and consequently minimizes wear between the elastic member and the components. As the spacing between the elastic member and the components increases, however, the elastic member becomes more prone to twisting and skewing during operation. Therefore, the first positioning portion and the second positioning portion are used to position the elastic member, which can mitigate the misalignment of the elastic member during operation. This not only significantly reduces wear between the elastic member and the components, but also prevents misalignment during operation.

Additionally, in this embodiment, when the valve is in the closed state, both the first end portion and the second end portion of the pre-compressed spring 6 include closely arranged sections, which are respectively defined as a first closely arranged section 61 and a second closely arranged section 62. The closely arranged sections are always in a closely arranged state. When the valve is in the closed state, the closely arranged sections are compressed firmly, and a part of the spring between them is in a relatively naturally expanded state. When the valve is opened, the state of the closely arranged sections will not change, since they are already in a closely arranged state. As the movable core component 5 gradually moves upward, the part between the two closely arranged sections is compressed.

At this time, one end of the spring 6 is inserted in the first hole portion 73 and in the first positioning groove 75. This can also be understood as a stepped groove being provided on the first end face, where a smaller diameter portion of the stepped groove is the first positioning groove 75, and a larger diameter portion of the stepped groove is the first hole portion 73. The closely arranged section at this end of the spring 6 is inserted in the first positioning groove 75. In FIG. 2, the closely arranged section at an upper end of the spring 6 is inserted into the first positioning groove 75 and abuts against a bottom wall 74 of the first positioning groove 75. The closely arranged section at the upper end of the spring 6 is defined as the first closely arranged section 61. Correspondingly, the other end of the spring 6 is inserted in the second hole portion 518 and also in the second positioning groove 517, and abuts against a bottom wall 511 of the second positioning groove 517. This can be understood as a stepped groove being provided on the second end face of the movable core component 5, where a smaller diameter portion of the stepped groove is the second positioning groove 517, and a larger diameter portion of the stepped groove is the second hole portion 518. The closely arranged section at this end of the spring 6 is inserted in the second positioning groove 517. In FIG. 2, the closely arranged section at the upper end of the spring 6 is inserted in the second positioning groove 517 and abuts against the bottom wall 511 of the second positioning groove 517. The closely arranged section at this end of the spring 6 is defined as the second closely arranged section 62.

Moreover, the first closely arranged section 61 is in clearance fit with a side wall of the first positioning groove 75, where the side wall refers to an inner circumference of the first positioning groove 75. As shown in FIG. 2, a diameter of the first positioning groove 75 is D4. The second closely arranged section 62 is in clearance fit with a side wall of the second positioning groove 517, where the side wall refers to an inner circumference of the second positioning groove 517. The clearance fit mentioned in the present application means that there is a small clearance between the first closely arranged section 61 and the side wall of the first positioning groove 75 to achieve positioning purposes, which is different from transition fit and interference fit. This clearance allows the first closely arranged section 61 to be inserted into the first positioning groove 75 without requiring any substantial pressure. For example, this clearance is less than or equal to 0.1 mm. The fit between the second closely arranged section 62 and the second positioning groove 517 is also a clearance fit. A clearance between the second closely arranged section 62 and the second positioning groove 517 is also less than or equal to 0.1 mm.

As shown in FIG. 2, a diameter of the spring 6 is D3, bore diameters of the first hole portion 73 and the second hole portion 518 are both D5, and bore diameters of the first positioning groove 75 and the second positioning groove 517 are both D4. D4 is slightly larger than D3 to achieve the clearance fit. For instance, the difference S1 between D4 and D3 satisfies S1 ≤ 0.1mm. D5 is larger than both D3 and D4, meaning that there is a greater difference between the diameter of the spring 6 and each of the bore diameters of the first hole portion 73 and the second hole portion 518. This provides a space for the deformation of the spring 6. With such arrangement, the first closely arranged section 61 and the second closely arranged section 62 are in clearance fit with the respective positioning portions, preventing deformation and changes in their outer diameters, thus avoiding friction with the positioning portions. This arrangement also helps maintain the stability of the spring 6. When the movable core component 5 of the solenoid valve approaches the static core component 7 to further compress the spring 6, the outer diameter of the part of the spring 6 between the two closely arranged sections will increase, and there may be bending and deformation. Due to the relatively larger bore diameters of the first hole portion 73 and the second hole portion 518, it is less likely for the spring 6 to experience friction against the movable core component 5 or the static core component 7, thereby reducing or avoiding wear, and consequently improving the service life of the spring 6 and enhancing the reliability of the solenoid valve.

It can be seen that in this embodiment, the groove structure for mounting the spring 6 includes a hole portion and a positioning portion arranged on a bottom wall of the hole portion. The hole portion can limit the position of a main body portion of the spring 6 to some degree, preventing excessive deformation or deviation. The bore diameter D3 of each hole portion is relatively large, and the spacing between the spring 6 and the side wall of the hole portion is large, so as to prevent contact and friction between the main body portion of the spring 6 and the side wall during compression and deformation. The positioning portions reliably position the respective closely arranged sections of the spring 6, thereby achieving the positioning of the entire spring 6 and also avoiding or reducing contact and friction.

Additionally, a height of the first closely arranged section 61 in the axial direction of the solenoid valve may be greater than a depth of the first positioning groove 75. Similarly, a height of the second closely arranged section 62 in the axial direction of the solenoid valve may be greater than a depth of the second positioning groove 517. This ensures that when the main body portion of the spring 6 between the two closely arranged sections undergoes compression and deformation, it will not experience friction against the first positioning groove 75 or the second positioning groove 517, nor will it easily rub against the bottom wall 74 of the first hole portion 73 or the bottom wall 511 of the second hole portion 518.

Additionally, the number of turns in the first closely arranged section 61 and the number of turns in the second closely arranged section 62 may be greater than or equal to one, to further ensure the reliability of the complete compression of the closely arranged sections, so that the joint of each closely arranged section and the main body portion of the spring 6 will also avoid friction with the first positioning groove 75 or the second positioning groove 517.

In this embodiment, a height of the first closely arranged section 61 along the axial direction of the valve device is defined as h2, and a depth of the first positioning groove 75 or a height of a first positioning boss 75' is defined as h1, with 0.8h2 ≤ h1 ≤ h2. That is, the height h2 of the first closely arranged section 61 should be slightly larger than h2 to ensure the clearance fit between the first closely arranged section 61 and the positioning portion and improve the positioning effect.

As shown in FIG. 2, in this embodiment, a junction of the first positioning groove 75 and the bottom wall 76 of the first hole portion 73 has a rounded corner structure, and a junction of the second positioning groove 511 and the bottom wall 519 of the second hole portion 518 also has a rounded corner structure. This further ensures no friction is generated between the rounded corners and the joint of each closely arranged section and the main body portion of the spring 6 during the compression process, or at least reduces such friction.

As shown in FIG. 1, when the solenoid valve according to this embodiment is in the closed state, there is a first axial spacing H1 between the movable core component 5 and the static core component 7. The solenoid valve further includes an upward travel stop component. After the solenoid valve is opened, the movable core component 5 is axially limited by the upward travel stop component. When the valve is in the closed state, there is a second axial spacing H2 between the movable core component 5 and the upward travel stop component, with H1 being greater than H2.

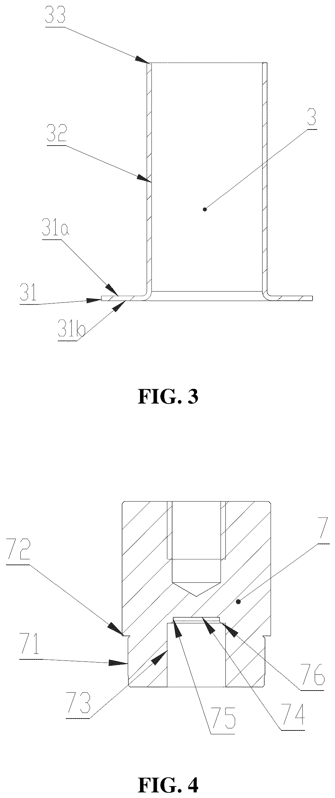

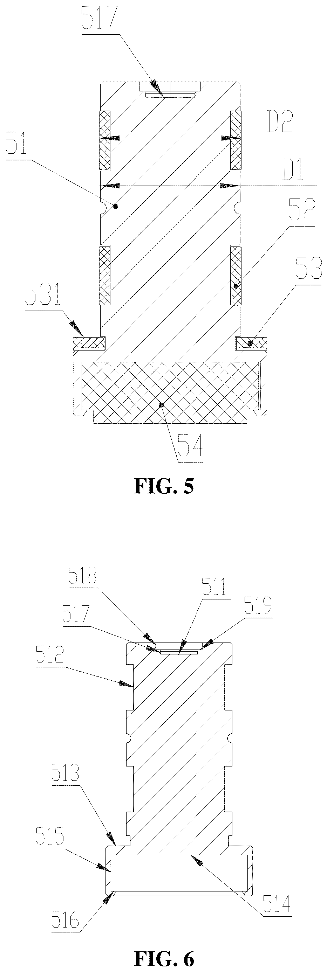

Referring to FIG. 1 and in conjunction with FIGS. 3 to 5 for understanding, FIG. 3 is a schematic view of a sleeve 3 in FIG. 1, FIG. 4 is a schematic view of the static core component 7 in FIG. 1, and FIG. 5 is a schematic view of the movable core component 5 in FIG. 1.

The solenoid valve in this embodiment further includes a connecting nut 4, a sleeve 3, and a valve seat 1. The sleeve 3 is fixed to the static core component 7. As shown in FIG. 4, an outer circumferential wall of the static core component 7 is provided with a first annular step 72. An upper end face 33 of the sleeve 3 abuts against the first annular step 72. The sleeve 3 may be fixed to the static core component 7 through threaded connection, welding, or other means. A part of the static core component 7 below the first annular step 72 is an insertion segment 71, which is located in the sleeve 3.

The sleeve 3 includes a cylindrical sleeve main body 32. A lower end of the sleeve main body 32 has a first annular portion 31 that extends radially outward. The connecting nut 4 includes a cylindrical portion 42 that extends axially and a second annular portion 41 that extends radially. The cylindrical portion 42 is threadedly connected to the valve seat 1. As shown in FIG. 1, the valve seat 1 is provided with an annular connecting portion 14 that extends in the axial direction of the solenoid valve. The cylindrical portion 42 has internal threads, and the connecting portion 14 has external threads. The cylindrical portion 42 and the connecting portion 14 are threadedly connected, so that the second annular portion 41 presses against the first annular portion 31 of the sleeve 3, pressing the first annular portion 31 against an upper end of the connecting portion 14. An annular groove may be provided at the upper end of the connecting portion 14 to accommodate a sealing ring 2. A lower surface 31b of the first annular portion 31 abuts against the sealing ring 2 to achieve a sealing effect, and an upper surface 31a abuts against the second annular portion 41. In this way, the sleeve 3 is fixed to the valve seat 1. The movable core component 5 is located in the sleeve 3 and is in sliding fit with an inner wall of the sleeve 3 in the axial direction. It should be noted that the connection method between the sleeve 3 and the valve seat 1 is not limited to this, and the connection may be achieved through conventional connection methods such as direct welding or threaded connection, which are not specifically restricted in this embodiment.

As shown in FIG. 5, the movable core component 5 further includes a washer 53. A lower end of a movable core main body 51 has a second annular step 513. The washer 53 is sleeved on the movable core main body 51 and supported by the second annular step 513. An inner wall of the first annular portion 31 of the sleeve 3 forms the upward travel stop component. There is a second axial spacing H2 between the washer 53 and the first annular portion 31. The provision of the washer 53 can reduce or avoid impact noise and wear when it comes into contact with the first annular portion 31. It should be noted that the second annular step 513 of the movable core component 5 may directly abut against and contact the first annular portion 31. Alternatively, the washer may be arranged on the lower surface of the first annular portion 31.

In this embodiment, the first axial spacing H1 is greater than the second axial spacing H2. When the solenoid valve is opened to its maximum opening extent, the movable core component 5 is first limited by the upward travel stop component, meaning that the maximum axial stroke of the movable core component 5 is the second axial spacing H2. In this way, the movable core component 5 will not come into contact with the static core component 7. Consequently, when the solenoid valve is de-energized, there will not be a large remanence between the movable core component 5 and the static core component 7. Therefore, the spring 6 does not need to overcome the large remanence to close the valve. Correspondingly, a large electromagnetic force is not required to overcome the spring force to open the valve. In other words, the configuration in which the first axial spacing H1 is greater than the second axial spacing H2 ensures that the movable core component 5 and the static core component 7 do not come into contact, thereby reducing residual magnetism.

Although the first annular portion 31 of the sleeve 3 serves as the upward travel stop component in the above description, it should be noted that this does not exclude other possible configurations. Any component that can limit the stroke of the movable core component 5 during the valve opening process can serve as the upward travel stop component. For example, the upward travel stop component may alternatively be arranged on the connecting portion 14 of the valve seat 1.

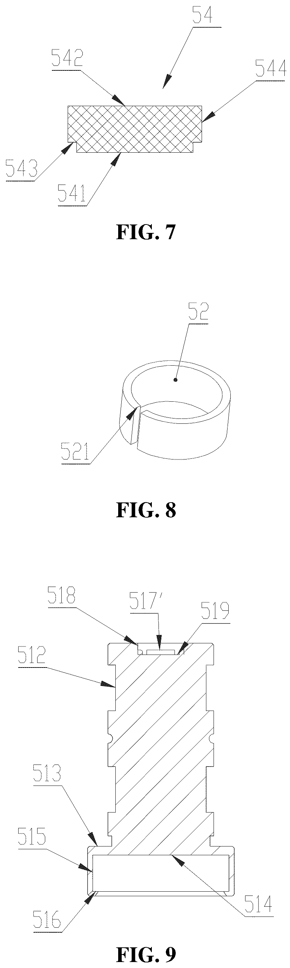

Referring to FIGS. 6 to 8, FIG. 6 is a schematic view of the movable core main body 51 of the movable core component 5 in FIG. 5, FIG. 7 is a schematic view of a sealing block 54 of the movable core component 5 in FIG. 5, and FIG. 8 is a schematic view of a guide ring 52 of the movable core component 5 in FIG. 5.

In this embodiment, the movable core component 5 includes a movable core main body 51, a sealing block 54, and a guide ring 52. A cylindrical portion 515 is provided at a lower end of the movable core main body 51. A receiving cavity is formed in the cylindrical portion 515. The sealing block 54 is disposed in the receiving cavity. The sealing block 54 may exhibit a certain degree of elasticity. A lower edge of the cylindrical portion 515 is provided with a limiting portion 516 extending inward. The sealing block 54 is inserted into the receiving cavity, and an outer circumference 544 of the sealing block 54 is in clearance fit with an inner circumference of the cylindrical portion 515. An upper end face 542 of the sealing block 54 abuts against a bottom wall 514 of the receiving cavity. A lower end of the sealing block 54 is further provided with a third annular step 543, which abuts against the limiting portion 516. The limiting portion 516 prevents the sealing block 54 from disengaging from the receiving cavity. A lower end face 541 of the sealing block 54 protrudes downward beyond the limiting portion 516. The lower end face 541 of the sealing block 54 is configured to directly contact an edge of the valve port 12 to achieve effective sealing.

An outer circumferential wall of the movable core main body 51 is further provided with an annular groove 512. The guide ring 52 is partially accommodated in the annular groove 512. An outer diameter D2 of the guide ring 52 is greater than an outer diameter D1 of the annular groove 512, that is, a part of the guide ring 52 protrudes radially beyond the annular groove 512. In this way, when the movable core component 5 slides relative to the sleeve 3, it is the guide ring 52 that comes into sliding contact with the sleeve 3, reducing friction and facilitating smoother axial movement. The guide ring 52 may be made of a lubricated plastic material to further reduce sliding friction.

Additionally, as shown in FIG. 8, the guide ring 52 is provided with a gap 521 extending axially. That is, the guide ring 52 is interrupted in the circumferential direction, forming the gap 521. With such an arrangement, when the solenoid valve needs to be closed after being opened, the coil of the solenoid valve is de-energized, a medium can flow from an inlet 11 of the solenoid valve into a space between the movable core component 5 and the static core component 7 through the gap 521 of the guide ring 52. The pressure of the medium can act on the movable core component 5. Moreover, the medium pressure above the movable core component 5 is equal to the pressure at the inlet 11. Below the sealing block 54, since the valve port 12 is still open, the pressure below the sealing block 54 is lower than the pressure at the inlet 11. Therefore, under the pressure differential, the sealing block 54 moves downward, enabling the valve port 12 to be closed more rapidly, thereby improving the response speed of valve closure.

The number of the guide ring 52 may be one, or may be more than one, i.e. two or more than two. When multiple guide rings 52 are provided, they are distributed along the axial direction of the movable core main body 51. Correspondingly, a matching number of annular grooves 512 are provided on the movable core main body 51. In this embodiment, two guide rings 52 are provided, which enable more stable sliding fit between the guide rings 52 and the inner wall of the sleeve 3.

The working process of the solenoid valve in this embodiment is as follows.

This solenoid valve is used in conjunction with a coil (not shown in FIG. 1). A medium controlled by the solenoid valve may be a gas or other fluids. In this example, the medium is a gas, and the solenoid valve is a pneumatic solenoid valve. The inlet 11 of the solenoid valve is supplied with a high-pressure gas, and an outlet 13 of the valve seat 1 is in communication with the atmosphere. The high-pressure gas flows into a cavity between the movable core component 5 and the static core component 7 through the gap between the sleeve 3 and the movable core component 5. Under the pressure of the high-pressure gas and the spring force, the movable core component 5 seals the valve port 12. When the coil is energized, it generates a magnetic field around the valve body of the solenoid valve. The movable core component 5, under the action of the electromagnetic force, overcomes the force of the spring 6 and moves upward. The gas in the cavity above the movable core component 5 flows out to a lower end of the movable core component 5 through the gap 521 of the guide ring 52, reducing the gas pressure above the movable core component 5. When the upper end face 531 of the washer 54 comes into contact with the lower end face of the first annular portion 31 of the sleeve 3, i.e., after the movable core component 5 has traveled a distance H2, the valve port 12 reaches its maximum opening extent.

When the coil is de-energized, the magnetic field generated by the coil disappears. The high-pressure gas flows from the inlet 11 into the cavity between the movable core component 5 and the static core component 7 through the gap 521 of the guide ring 52. The movable core component 5 moves downward more rapidly under the spring force and the pressure of the high-pressure gas. When the lower end face 541 of the sealing block 54 comes into contact with the edge of the valve port 12, the valve port 12 is closed.

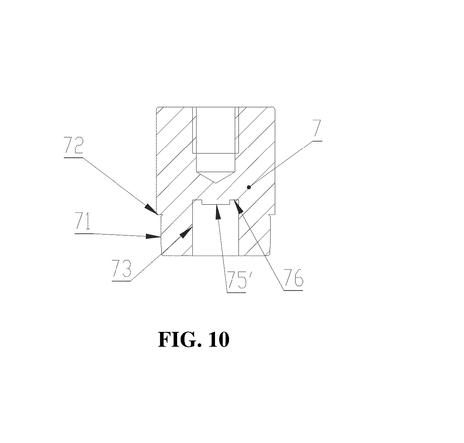

Referring to FIGS. 9 and 10, FIG. 9 is a schematic view of a movable core main body 51 of a movable core component 5 of a solenoid valve according to a second embodiment of the present application, and FIG. 10 is a schematic view of a static core component 7 of the solenoid valve according to the second embodiment of the present application.

The structure described in the second embodiment is the same as that in the first embodiment, differing only in the structure of the positioning portions provided on the movable core component 5 and the static core component 7. In the first embodiment, the positioning portions are the first positioning groove 75 and the second positioning groove 517. In the second embodiment, the positioning portions are positioning bosses. As shown in FIGS. 9 and 10, the bottom wall 76 of the first hole portion 73 of the static core component 7 is provided with a protruding first positioning boss 75'. The bottom wall 519 of the second hole portion 518 of the movable core component 5 is provided with a protruding second positioning boss 517'. The first closely arranged section 61 of the spring 6 is sleeved on the first positioning boss 75' and is in clearance fit with an outer peripheral wall of the first positioning boss 75'. The second closely arranged section 62 of the spring 6 is sleeved on the second positioning boss 517' and is in clearance fit with an outer peripheral wall of the second positioning boss 517'. Similarly, the clearance fit means that there is a small clearance between the mating parts, which is different from transition fit or interference fit. This allows the closely arranged sections of the spring 6 to be easily sleeved onto outer sides of the first positioning boss 75' and the second positioning boss 517' respectively. The effects of the first positioning boss 75' and the second positioning boss 517' can be understood by referring to the first embodiment and will not be repeated herein. Similarly, the first closely arranged section 61 may alternatively be engaged with the outer peripheral wall of the first positioning boss 75', and the second closely arranged section 62 may alternatively be engaged with the outer peripheral wall of the second positioning boss 517'.

It can be understood that in FIGS. 9 and 10, the positioning bosses are of columnar structures. Apparently, the positioning bosses are not limited to the columnar structures. The main purpose of the positioning bosses is to allow the closely arranged sections of the spring 6 to be sleeved onto them, so as to position the closely arranged sections. Therefore, the positioning bosses do not necessarily have cylindrical structures, and may have annular structures or other suitable structures.

It can also be understood that in the above embodiments, both the movable core component 5 and the static core component 7 are provided with the positioning portions. It is also possible for only one of them to be provided with a positioning portion, which can still play a role in positioning the spring 6 and reducing wear to some extent. Moreover, the structures of the positioning portions provided on the movable core component 5 and the static core component 7 do not have to be the same. The positioning portions can both be the positioning grooves as described in the first embodiment, or both be the positioning bosses as described in the second embodiment. Alternatively, one of them is the positioning boss and the other of them is the positioning groove.

The principle and the embodiments of the present application are described by specific embodiments. The above embodiments are described to facilitate understanding of the method and the core idea of the present application. Those skilled in the art may make several improvements and modifications to the present application without departing from the principles of the present application. These improvements and modifications shall fall within the protection scope of the claims of the present application.

## Claims

1. A valve device, comprising:
a static core component;
a movable core component, and
an elastic member located between the static core component and the movable core component, the elastic member comprising a first end portion and a second end portion, and a wire diameter of the elastic member being defined as M, wherein
the static core component is provided with a first hole portion and a first positioning portion, the first hole portion is recessed inward from an end face of the static core component, the first positioning portion is recessed or protrudes from a bottom wall of the first hole portion, a diameter of the first hole portion is greater than that of the first positioning portion, the first hole portion comprises a first hole wall, the first end portion is located at and limited by the first positioning portion, and a preset radial spacing L1 is present between the elastic member and the first hole wall, wherein L1 ≥ 0.5M; and/or
the movable core component is provided with a second hole portion and a second positioning portion, the second hole portion is recessed inward from an end face of the movable core component, the second positioning portion is recessed or protrudes from a bottom wall of the second hole portion, a diameter of the second hole portion is greater than that of the second positioning portion, the second hole portion comprises a second hole wall, the second end portion is located at and limited by the second positioning portion, and a preset radial spacing L2 is present between the elastic member and the second hole wall, wherein L2 ≥ 0.5M.

2. The valve device according to claim 1, wherein the first end portion comprises a first closely arranged section, and the second end portion comprises a second closely arranged section, wherein the first closely arranged section is located at and limited by the first positioning portion, and/or the second closely arranged section is located at and limited by the second positioning portion.

3. The valve device according to claim 1, wherein
the first positioning portion is recessed or protrudes from the bottom wall of the first hole portion, the first positioning portion is in a form of a first positioning groove or a first positioning boss, and the first end portion comprises a first closely arranged section, wherein
the first closely arranged section is at least partially located in and limited by the first positioning groove and is in clearance fit or in engagement with a groove wall of the first positioning groove; or
the first closely arranged section is sleeved on the first positioning boss and is in clearance fit or in engagement with a side wall of the first positioning boss.

4. The valve device according to claim 3, wherein the number of turns of the first closely arranged section is greater than or equal to one, and a fit clearance between the first closely arranged section and the first positioning portion is defined as S1, wherein S1 ≤ 0.1 mm.

5. The valve device according to claim 3, wherein a height of the first closely arranged section along an axial direction of the valve device is defined as h2, and a depth of the first positioning groove or a height of the first positioning boss is defined as h1, wherein 0.8h2 ≤ h1 ≤ h2.

6. The valve device according to claim 1, wherein
the second positioning portion is recessed or protrudes from the bottom wall of the second hole portion, the second positioning portion is in a form of a second positioning groove or a second positioning boss, and the second end portion comprises a second closely arranged section, wherein
the second closely arranged section is at least partially located in and limited by the second positioning groove and is in clearance fit or in engagement with a groove wall of the second positioning groove; or
the second closely arranged section is sleeved on the second positioning boss and is in clearance fit or in engagement with a side wall of the second positioning boss.

7. The valve device according to claim 1, wherein
the first positioning portion is in a form of a first positioning groove, and the second positioning portion is in a form of a second positioning groove, the first positioning groove is recessed inward from the bottom wall of the first hole portion, and the second positioning portion is recessed inward from the bottom wall of the second hole portion;
the first end portion comprises a first closely arranged section, the first closely arranged section is at least partially located in and limited by the first positioning groove, and the first closely arranged section is in clearance fit or in engagement with a groove wall of the first positioning groove; and
the second end portion comprises a second closely arranged section, the second closely arranged section is at least partially located in and limited by the second positioning groove, and the second closely arranged section is in clearance fit or in engagement with a groove wall of the second positioning groove.

8. The valve device according to claim 7, wherein a junction of the first positioning groove and the bottom wall of the first hole portion is provided with a rounded corner structure, and a junction of the second positioning groove and the bottom wall of the second hole portion is provided with a rounded corner structure.

9. The valve device according to claim 1, wherein
the first positioning portion is in a form of a first positioning boss, the second positioning portion is in a form of a second positioning boss, the first positioning boss protrudes from the bottom wall of the first hole portion, and the second positioning boss protrudes from the bottom wall of the second hole portion;
the first end portion comprises a first closely arranged section, and the second end portion comprises a second closely arranged section; and
the first closely arranged section is sleeved on the first positioning boss and is in clearance fit or in engagement with the first positioning boss, and the second closely arranged section is sleeved on the second positioning boss and is in clearance fit or in engagement with the second positioning boss.

10. The valve device according to any one of claims 1 to 9, further comprising:
a washer portion connected to the movable core component; and
an upward travel stop component, wherein
when the valve device is in a fully opened state, the washer portion abuts against the upward travel stop component; and
when the valve device is in a closed state, a first axial spacing is present between the movable core component and the static core component, a second axial spacing is present between the washer portion and the upward travel stop component, and the first axial spacing is greater than the second axial spacing.

11. The valve device according to claim 10, wherein a solenoid valve comprises a connecting nut, a sleeve, and a valve seat;
the sleeve is fixed to the static core component, and a lower end of the sleeve is provided with a first annular portion that extends radially outward;
the connecting nut comprises a cylindrical portion that extends axially and a second annular portion that extends radially, the cylindrical portion is threadedly connected to the valve seat, and the first annular portion is pressed between the second annular portion and the valve seat; and
the first annular portion forms the upward travel stop component.
